# EUROPEAN PATENT APPLICATION

(11) **EP 3 626 321 A1**
(43) Date of publication of application: **25.03.2020**
(21) Application number: 18828535.7
(22) Date of filing: 14.06.2018
(51) Int. Cl.: A63F 13/497, A63F 13/27, A63F 13/79, A63F 13/86, H04N 21/4728

(54) **INFORMATION PROCESSING SYSTEM AND VIDEO REPLAY METHOD**

(30) Priority: 04.07.2017 JP 2017131422
(71) Applicant: Kabushiki Kaisha Sega Games doing Business as Sega Games Co., Ltd., Shinagawa-ku Tokyo 141-0033 (JP)
(72) Inventor: NOGUCHI, Yosuke, Tokyo 1410033 (JP); YAMAMOTO, Sohey, Tokyo 1410033 (JP)
(74) Representative: Regimbeau
(86) International application number: PCT/JP2018/022789
(87) International publication number: WO 2019/009041

(57) **Abstract**

To provide an information processing system that can improve the quality of a running commentary that uses a recorded video.

To solve the above problem, the information processing system includes at least one game machine that outputs a game video and game data indicating types of events occurred in a game and time points at which the events occurred; a game video storage device that stores the game video; a game data storage device that stores the game data; a content selection receiving device that displays, based on the game data, contents representing types of one or more events occurred in the game and time points at which the one or more events occurred and receives, from a user, an operation to select a content from the contents; a controller that controls a playback device, based on the selected content, to start playing the game video from a time point at which an event represented by the selected content occurred; and the playback device that plays the game video stored in the game video storage device under the control of the controller.

## Description

### TECHNICAL FIELD

The present invention relates to an information processing system and a video playing method.

### BACKGROUND ART

At an amusement facility such as a game arcade or an event site, events such as a tournament are often held to promote new games and for interaction among game fans. In such an event, it is often the case that a game screen of a game being actually played is displayed on a large monitor and a commentator gives a running commentary on the game.

There is a known video generation system that can display various types of information as live contents along with the progress of a game in addition to a video of the game and thereby improve the quality of a running commentary in an event (see, for example, Patent Document 1).

### RELATED-ART DOCUMENTS

### Patent Document

Patent Document 1: Japanese Patent No. 6098691

### DISCLOSURE OF INVENTION

### PROBLEMS TO BE SOLVED BY THE INVENTION

The related-art video generation system displays various types of information in real time along with the progress of a game being played in addition to a video of the game. However, the video generation system is not configured to provide a running commentary after the game is finished. Such a problem exists not only in a system for providing a running commentary on a game but also exists in any information processing system that displays various types of information in addition to a video in real time along with the progress of the video.

The present invention is made in view of the above-described problem. One purpose of the present invention is to provide an information processing system that can improve the quality of a running commentary that uses a recorded video.

### MEANS FOR SOLVING THE PROBLEMS

To solve the above problem, the present invention provides an information processing system including at least one game machine that outputs a game video and game data indicating types of events occurred in a game and time points at which the events occurred; a game video storage device that stores the game video; a game data storage device that stores the game data; a content selection receiving device that displays, based on the game data, contents representing types of one or more events occurred in the game and time points at which the one or more events occurred and receives, from a user, an operation to select a content from the contents; a controller that controls a playback device, based on the selected content, to start playing the game video from a time point at which an event represented by the selected content occurred; and the playback device that plays the game video stored in the game video storage device under the control of the controller.

### ADVANTAGEOUS EFFECT OF THE INVENTION

The present invention makes it possible to improve the quality of a running commentary that uses a recorded video.

### BRIEF DESCRIPTION OF THE DRAWINGS

FIG. 1 is a drawing illustrating an example of a configuration of an information processing system according to an embodiment;
FIG. 2 is a drawing illustrating an example of a hardware configuration of a computer according to an embodiment;
FIG. 3 is a block diagram illustrating examples of functional configurations of a game machine, a live controller, a video system workstation, and a mobile terminal according to an embodiment;
FIG. 4 is a table illustrating an example of an event log;
FIG. 5 is a table illustrating an example of player information;
FIG. 6 is a flowchart illustrating an example of a battle time-line screen generation process;
FIG. 7 is a table illustrating an example of icon information;
FIG. 8 is a drawing illustrating an example of a battle time-line screen;
FIG. 9 is a flowchart illustrating an example of a game video playing process;
FIG. 10 is a drawing illustrating another example of a battle time-line screen;
FIG. 11 is a drawing illustrating an example of a screen for selecting a game result for which a battle time-line screen is displayed;
FIG. 12 is a drawing illustrating another example of a configuration of an information processing system according to an embodiment;
FIG. 13 is a table illustrating an example of vote data;
FIG. 14 is a flowchart illustrating an example of a voting time-line screen generation process;
FIG. 15 is a table illustrating another example of icon information;
FIG. 16 is a drawing illustrating an example of a voting time-line screen; and
FIG. 17 is a flowchart illustrating an example of a presentation video playing process.

### DESCRIPTION OF EMBODIMENTS

Embodiments of the present invention are described below in detail.

### [FIRST EMBODIMENT]

### <SYSTEM CONFIGURATION>

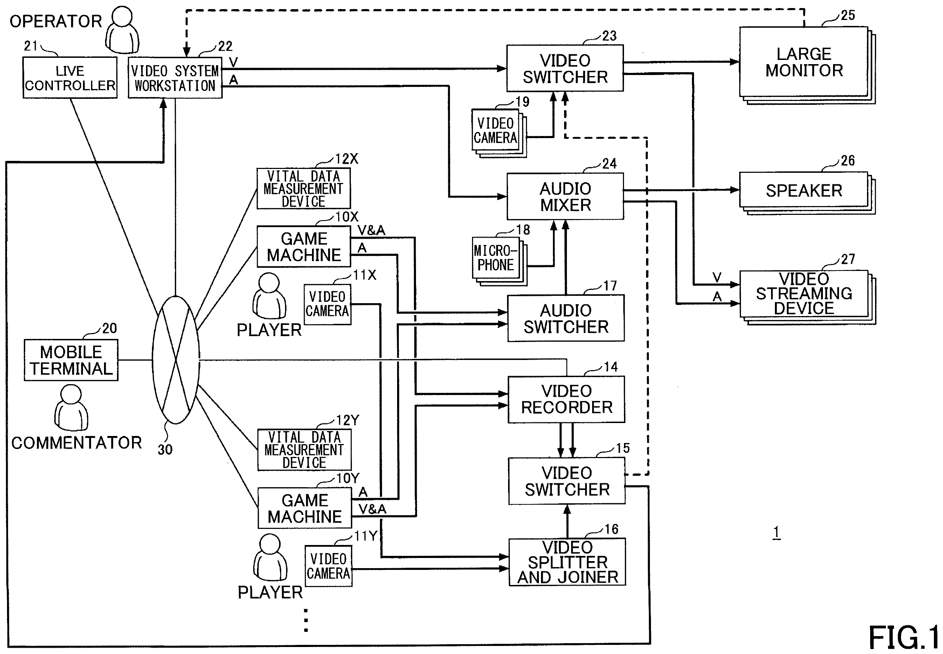

FIG. 1 is a drawing illustrating an example of a configuration of an information processing system according to an embodiment. An information processing system 1 illustrated in FIG. 1 is constructed, for example, in an amusement facility such as a game arcade.

The information processing system 1 of FIG. 1 includes game machines 10, video cameras 11, vital data measurement devices 12, a video recorder 14, a video switcher 15, a video splitter and joiner 16, an audio switcher 17, microphones 18, video cameras 19, a mobile terminal 20, a live controller 21, a video system workstation 22, a video switcher 23, an audio mixer 24, large monitors 25, speakers 26, video streaming devices 27, and a network 30.

Each of one or more game machines 10 (10X, 10Y, ...) is operated by a player. Examples of game machines 10 include various game devices such as a commercial game machine, a home game machine, and a personal computer (PC) on which a game application is running, and a terminal (a commercial game machine including functions to display a live video of a game and to replay, play back, and record a video of a game).

Each of one or more video cameras 11 (11X, 11Y, ...) captures a video of a player playing a game on the game machine 10. Each of one or more vital data measurement devices 12 (12X, 12Y, ...) measures vital data (various types of biological information such as a heart rate and a pulse) of a player playing a game on the game machine 10. The vital data measurement device 12 is connected by wire or wirelessly to the network 30 and transmits data to the live controller 21 and the video system workstation 22. If necessary for processing such as data conversion, the vital data measurement device 12 may be connected to the network 30 via a relay such as a computer. The vital data measurement device 12 may also be a device that handles any other type of data.

A video-audio output port (V & A: Video & Audio) of the game machine 10 is connected to a video-audio input port of the video recorder 14. The video recorder 14 records (or registers) a video audio signal from the game machine 10 and outputs the video audio signal from a video-audio output port. The video-audio output port of the video recorder 14 is connected to an input port of the video switcher 15.

An audio output port (A: Audio) of the game machine 10 is connected to an input port of the audio switcher 17. An output port of the video camera 11 is connected to an input port of the video splitter and joiner 16. An output port of the video splitter and joiner 16 is connected to an input port of the video switcher 15.

The video switcher 15 outputs a video signal, which is selected from video signals input to multiple input ports, to the video system workstation 22. The video splitter and joiner 16 splits video signals input to the multiple input ports into multiple regions shaped like, for example, tiles, combines the regions to generate a video signal, and outputs the video signal to the video switcher 15. The audio switcher 17 outputs an audio signal, which is selected from audio signals input to multiple input ports, to the audio mixer 24.

The vital data measurement device 12 outputs measured vital data to the network 30. The video system workstation 22 can perform data processing such as graphing on the vital data output from the vital data measurement device 12. By using the vital data as live contents, the video system workstation 22 can generate a live video including biological states of the players.

The live controller 21 and the video system workstation 22 are computers operated by an operator (a commentator may also use these computers). Data communication ports of the live controller 21 and the video system workstation 22 are connected to the network 30. The video system workstation 22 includes a production monitor used for content production work and an on-air monitor used to monitor a video that is finally output from the video system workstation 22. Also, a data communication port of the mobile terminal 20, such as a tablet, smartphone, PC, or a digitizer pad, operated by the commentator is connected to the network 30.

One or more microphones 18 pick up, for example, voices of the commentator. One or more video cameras 19 capture videos of, for example, venue scenes. A video output port of the video system workstation 22 and output ports of the video cameras 19 are connected to input ports of the video switcher 23. The video switcher 23 includes a function to output a video signal selected from the video signals input to the multiple input ports and also includes a function to combine videos. As described later, the video system workstation 22 basically combines a game video from the game machine 10 and content images.

Configuring the video system workstation 22 to also combine videos and images eliminates the need to provide a dedicated device for combining game videos from the game machines 10 and content images. On the other hand, configuring the video switcher 23 to combine game videos from the game machines 10 and content images makes it possible to reduce the processing load of the video system workstation 22. In this case, an output port of the video switcher 15 is connected to an input port of the video switcher 23 as indicated by a dotted line.

Input ports of the audio mixer 24 are connected to an output port of the audio switcher 17, an audio output port of the video system workstation 22, and output ports of the microphones 18. The audio mixer 24 mixes audio signals input to the multiple input ports.

One or more large monitors 25 receive video signals from output ports of the video switcher 23. Each of the large monitors 25 is implemented by, for example, a large liquid crystal panel or a projector. If the large monitor 25 includes a touch panel, an operation signal from the touch panel is transmitted to an input port of the video system workstation 22 as indicated by a dotted line. In this case, the commentator may operate the touch panel of the large monitor 25 instead of or in addition to the mobile terminal 20.

One or more speakers 26 receive audio signals from output ports of the audio mixer 24. The video streaming device 27 performs video streaming. The video streaming device 27 receives video signals and audio signals as sources from output ports of the video switcher 23 and the audio mixer 24.

The video switcher 15, the audio switcher 17, the video switcher 23, and the audio mixer 24 may be placed in such positions that the operator can directly operate these devices or may be configured such that the operator can remotely operate these devices. The game machines 10 output game data described later from data communication ports to the network 30.

The information processing system 1 includes a storage for storing game data output from the game machines 10 to the network 30. The storage for storing the game data may be provided in the live controller 21 or the video system workstation 22. Alternatively, a separate device for storing the game data may be provided. The information processing system 1 also includes a function to generate a battle time-line screen described later using the game data stored in the storage. The function for generating the battle time-line screen may be provided in the live controller 21 or the video system workstation 22. Alternatively, a separate device for generating the battle time-line screen may be provided.

In the present embodiment, as an example, the live controller 21 stores game data, and the video system workstation 22 generates a battle time-line screen using the game data. However, the present invention is not limited to this example. Needless to say, the configuration of the information processing system 1 illustrated in FIG. 1 is just an example and may be changed according to its application or purpose.

### <HARDWARE CONFIGURATION>

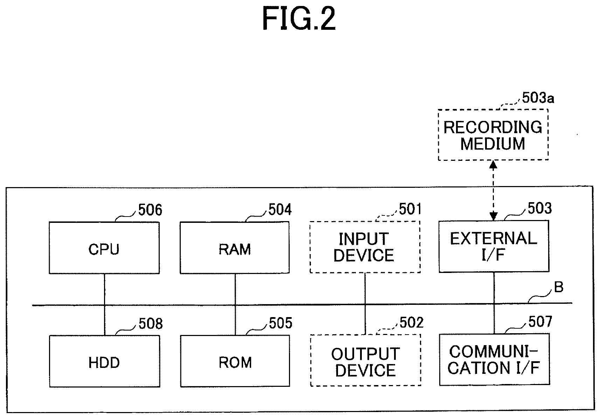

Each of the game machine 10, the mobile terminal 20, the live controller 21, and the video system workstation 22 illustrated in FIG. 1 is implemented by, for example, a computer having a hardware configuration illustrated in FIG. 2. FIG. 2 is a drawing illustrating an example of a hardware configuration of a computer according to the present embodiment.

The computer illustrated in FIG. 2 includes an input device 501, a display device 502, an external I/F 503, a RAM 504, a ROM 505, a CPU 506, a communication I/F 507, and an HDD 508 that are connected to each other via a bus B. The input device 501 and the display device 502 may be configured to be connected to the computer when necessary.

The input device 501 includes, for example, a keyboard and a mouse, and is used by a user such as a player, an operator, or a commentator to enter various operation signals. The display device 502 includes a display and displays processing results. The communication I/F 507 is an interface for connecting the computer to the network 30. The computer can perform data communications via the communication I/F 507.

The HDD 508 is an example of a non-volatile storage device for storing programs and data. For example, the HDD 108 stores an operating system (OS) that is basic software for controlling the entire computer, and applications for providing various functions on the OS.

The external I/F 503 is an interface between the computer and an external device such as a recording medium 503a. The computer 500 can read and write data from and to the recording medium 503a via the external I/F 503. Examples of the recording medium 503a include a flexible disk, a CD, a DVD, an SD memory card, and a USB memory. The input and output ports described above are examples of the external I/F 503.

The ROM 505 is an example of a non-volatile semiconductor memory (storage device) that can retain programs and data even when power is turned off. For example, the ROM 505 stores programs and data such as BIOS that is executed when the computer is turned on, OS settings, and network settings. The RAM 504 is an example of a volatile semiconductor memory (storage device) for temporarily storing programs and data.

The CPU 506 is a processor that loads programs and data from storage devices such as the ROM 505 and the HDD 508 into the RAM 504, and executes the loaded programs to control the entire computer and to implement various functions of the computer.

With the hardware configuration described above, the game machine 10, the mobile terminal 20, the live controller 21, and the video system workstation 22 of the present embodiment can provide various functions as described below.

<FUNCTIONAL CONFIGURATION>

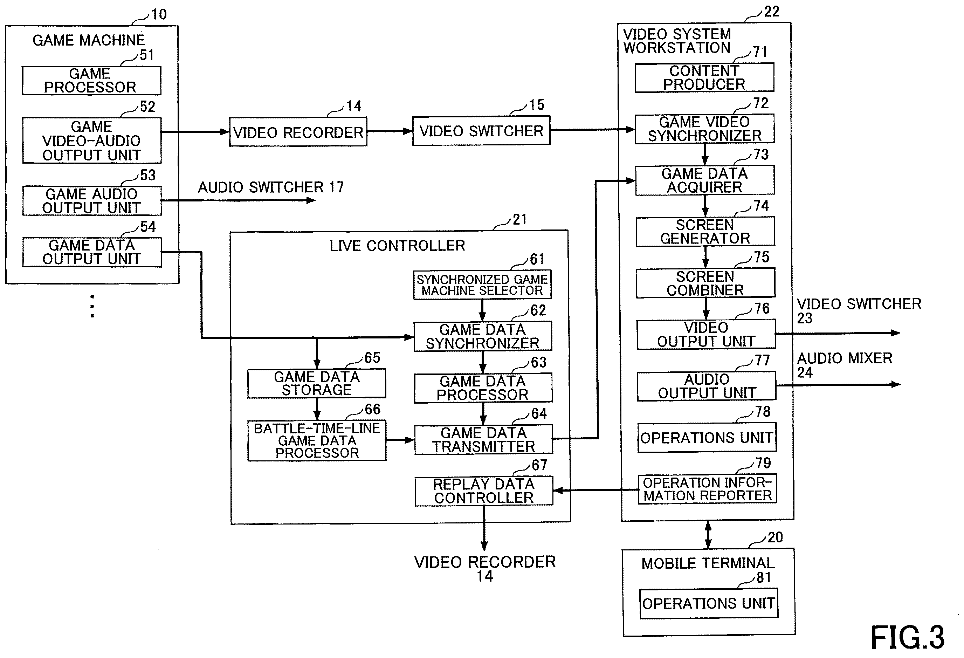

A functional configuration of the information processing system of the present embodiment is described with reference to the block diagram of FIG. 3. FIG. 3 is a block diagram illustrating examples of functional configurations of the game machine, the live controller, the video system workstation, and the mobile terminal of the present embodiment.

In FIG. 3, the game machine 10 includes a game processor 51, a game video-audio output unit 52, a game audio output unit 53, and a game data output unit 54. The game processor 51 includes a function to advance a game according to operations performed by the player. The game video-audio output unit 52 includes a function to output game videos and game audio. The game audio output unit 53 includes a function to output game audio. The game data output unit 54 includes a function to output various types of game data indicating states of the game.

When the game program of a target game includes a function to output game data indicating events occurred in the game, the function can be used for this purpose. When the game program of a target game does not include a function to output game data indicating events occurred in the game, the function to output game data is added to the game program.

The game data includes, for example, information on operations input by players, various points gained in the game, position coordinates and states of objects and characters in the game, the status and results of the game, player names of players, game play results, and various types of information (various types of saved data information associated with player IDs of players) in an ID card storing saved data. The status and results of a game are examples of event log records and indicate the types and time of events occurred in the game.

The live controller 21 includes a synchronized game machine selector 61, a game data synchronizer 62, a game data processor 63, a game data transmitter 64, a game data storage 65, a battle-time-line game data processor 66, and a replay data controller 67.

The synchronized game machine selector 61 includes a function to receive a selection of a game machine 10 to be synchronized from the operator, and to set the game machine 10 as a synchronization target. Here, "synchronization" indicates that the live controller 21 obtains game data continuously and in real time from a game machine 10 that outputs a game video on which a running commentary is to be provided. The game data synchronizer 62 includes a function to continuously obtain game data output from the game data output unit 54 of the game machine 10.

The game data processor 63 includes a function to process the game data obtained by the game data synchronizer 62 into a data format that can be handled by the video system workstation 22 at a subsequent stage. For example, when a digital trading card game is a target, the game data processor 63 processes (or converts) an in-game data ID of a card into card-illustration-image file-path information in the live controller 21, card name text, and text describing a card effect.

As another example, when a racing game is a target, the game data processor 63 converts an in-game data ID of a racing car into image-file-path information in the live controller 21 and car-type name text. Game data (e.g., coordinate data) in a data format requiring no processing may not be processed.

The game data transmitter 64 includes a function to transmit game data processed by the game data processor 63 or unprocessed game data to the video system workstation 22. The transmission of game data from the game data transmitter 64 may be either performed automatically in response to the acquisition of the game data from the game machine 10 (synchronous transmission) or performed in response to a separate request from the video system workstation 22 (individual transmission). For example, individual transmission is performed when the commentator operates a user interface such as a button provided by the video system workstation 22 and it becomes necessary to obtain game data not included in synchronous transmission. This configuration makes it possible to increase variations of live contents.

The game data storage 65 stores game data output from the game data output unit 54 of the game machine 10. After the game is finished, the battle-time-line game data processor 66 reads game data stored in the game data storage 65 and processes the game data for a battle time-line.

Specifically, the battle-time-line game data processor 66 performs filtering to delete game data not necessary to generate a battle time-line screen described later. For example, the battle-time-line game data processor 66 deletes events unlikely to be used for the running commentary and events occurred too many times from events occurred during the game. By the filtering, the battle-time-line game data processor 66 can prevent an excessive number of icons from being arranged on the battle time-line screen and thereby prevent the operability of the battle time-line screen from being significantly reduced. The game data transmitter 64 transmits the game data processed by the battle-time-line game data processor 66 to the video system workstation 22.

The replay data controller 67 receives, from the video system workstation 22, operation information on an operation performed by the operator or the commentator to select an icon on the battle time-line screen described later. Based on the received operation information, the replay data controller 67 identifies a game machine 10 whose game video is to be replayed and a replay start point (time). The replay data controller 67 transmits a command for starting a replay of an identified content to the video recorder 14. Based on the received command, the video recorder 14 starts the replay.

The video system workstation 22 includes a content producer 71, a game video synchronizer 72, a game data acquirer 73, a screen generator 74, a screen combiner 75, a video output unit 76, an audio output unit 77, an operations unit 78, and an operation information reporter 79.

The content producer 71 includes a function to produce, in advance, live contents to be combined with (or superimposed on) a game video and a template of a battle time-line screen using various authoring applications.

Examples of live contents include various buttons and menus. Also, for example, 3D data, 2D data, text data, and video clips are used as materials for live contents.

The game video synchronizer 72 includes a function to receive a game video (using a function of a video input-output board) from the game machine 10 via the video recorder 14 and the video switcher 15. When the video system workstation 22 is not used to combine a game video and display contents, the game video synchronizer 72 may be omitted.

The game data acquirer 73 includes a function to obtain game data from the game data transmitter 64 of the live controller 21. The game data acquirer 73 obtains game data from the live controller 21 during or after a game.

The screen generator 74 includes a function to generate a live screen including live contents or a battle time-line screen based on the game data obtained by the game data acquirer 73. The screen combiner 75 includes a function to combine (superimpose) the live screen generated by the screen generator 74 with (on) a game video input to the game video synchronizer 72. When the video system workstation 22 is not used to combine a game video and display contents, the screen combiner 75 may be omitted. The video output unit 76 includes a function to transmit a video signal output from the screen combiner 75 to the video switcher 23.

The audio output unit 77 includes a function to output an audio signal, which represents, for example, a sound effect corresponding to an operation of a live content, to the audio mixer 24. The operations unit 78 includes a function to provide a user interface used by the operator to operate functions of the video system workstation 22 and to control components of the video system workstation 22 in response to operations.

The operation information reporter 79 reports, to the live controller 21, operation information indicating an operation performed by the operator to select an icon on a battle time-line screen described later.

The mobile terminal 20 provides the commentator with a screen that is the same as a video generated by the video system workstation 22 and where live contents or icons on a battle time-line are operable. The mobile terminal 20 includes an operations unit 81 that reports operations performed by the commentator on the live contents or the icons to the video system workstation 22.

When the mobile terminal 20 includes a touch panel function, an operation is performed, for example, by a tapping operation using a finger or a stylus. Here, "operable" live contents or icons indicate, for example, that the live contents or icons can be tapped, and processes corresponding to the tapped live contents or icons are triggered. The screen displayed on the mobile terminal 20 is also displayed on the operations unit 78 of the video system workstation 22, and the operator can also operate the live contents or icons using the operations unit 78 as with the mobile terminal 20.

The screen generator 74 uses game data processed by the battle-time-line game data processor 66 of the live controller 21 to generate a battle time-line screen described later. The battle time-line screen generated by the screen generator 74 is displayed such that the operator or the commentator can select icons arranged on the battle time-line screen.

When an operation to select an icon on the battle time-line screen is received, the operation information reporter 79 reports, to the replay data controller 67 of the live controller 21, information for identifying a game machine 10 to be replayed and a replay start point (time) based on icon information of the selected icon.

### <PROCESS>

Below, an exemplary process according to the present embodiment is described. In the process, a battle time-line screen is generated and displayed after a game, and the operator or the commentator can select, from the battle time-line screen, an event in the game to be replayed. On the battle time-line screen, icons indicating the types of events occurred during the game are arranged in chronological order. The operator or the commentator can select the icon of an event to be replayed from the battle time-line screen to start a replay such that the scene of the event is displayed.

### «PROCESSES DURING GAME»

The video system workstation 22 synchronously captures a game video from the game machine 10 and produces a live screen including effective live contents while referring to the game video. The live contents include, for example, a text commentary content, a 3D- or 2D-display content, and a video clip content. More specifically, software in the video system workstation 22 is used to produce various display contents that are used for running commentaries of events and include drawings, animation, and settings for synchronization with various programs.

During a game, the video system workstation 22 synchronously captures a game video from the game machine 10. The live controller 21 receives, from the operator, a selection of a game machine 10 to be synchronized and sets the game machine 10 as a synchronization target. One or more game machines 10 may be synchronized.

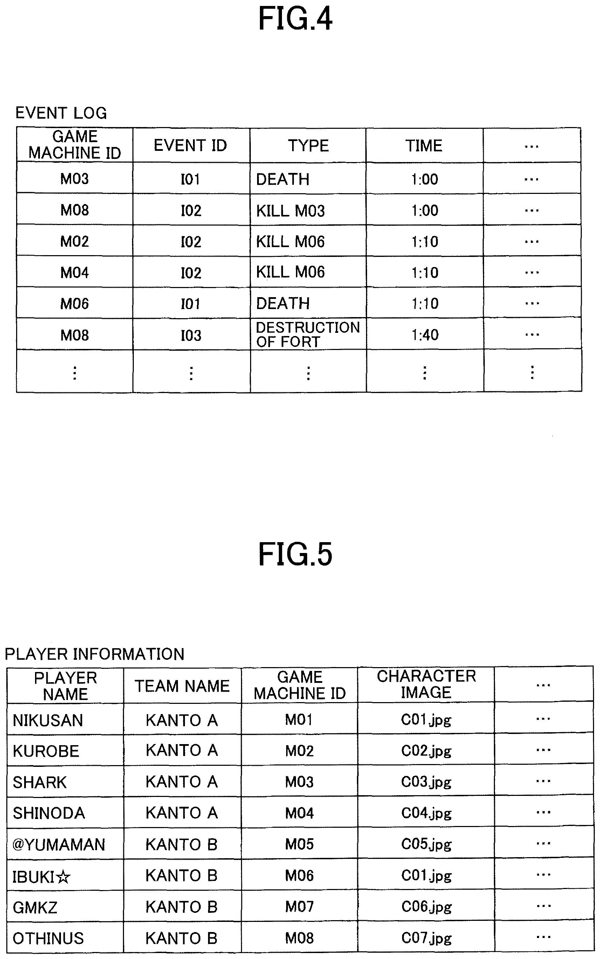

When game data is transmitted from the game machine 10 set as the synchronization target, the live controller 21 obtains the game data and synchronizes the game data with the game machine 10. The game data storage 65 of the live controller 21 stores the game data transmitted from the game machine 10. The game data stored in the game data storage 65 includes, for example, an event log as illustrated in FIG. 4 and player information as illustrated in FIG. 5.

FIG. 4 is a table illustrating an example of an event log. The event log illustrated in FIG. 4 includes fields such as a game machine ID, an event ID, a type, and a time. The game machine ID is an example of identification information that uniquely identifies a game machine 10 and may be represented by, for example, a machine number, a machine name, or a network address. The event ID is an example of identification information that identifies the type of an event occurred during a game.

The type indicates the type of an event occurred during a game. For example, the type "death" in the event log illustrated in FIG. 4 indicates a state where no hit point of the player character of the game machine 10 identified by the game machine ID is left. Also, the type "kill M03" in the event log illustrated in FIG. 4 indicates that the player character of the game machine 10 identified by the game machine ID caused another player character with a game machine ID "M03" to lose all hit points by attaching. Further, the type "destruction of fort" in the event log in FIG. 4 indicates that the player character of the game machine 10 identified by the game machine ID has destroyed a fort.

The field "time" in the event log illustrated in FIG. 4 indicates a time at which the event identified by the event ID occurred (e.g., time elapsed from the start of the game). The field "time" may be expressed in any other way as long as it can be used to generate a time-line of events.

FIG. 5 is a table illustrating an example of player information. The player information illustrated in FIG. 5 includes fields such as a player name, a team name, a game ID, and a character image. The player name is the name of a player who played the game on the game machine 10. The team name is the name of a team to which the player belongs. The game machine ID is the identification information of a game machine 10 with which the player played the game. The character image is information for identifying an image displayed, for example, next to the player name. For example, the character image is represented by an image file of a face image of the player or a face image of a player character used by the player.

The game data processor 63 of the live controller 21 processes game data as necessary. The live controller 21 transmits processed or unprocessed game data to the video system workstation 22. The video system workstation 22 obtains and synchronizes the game data.

The video system workstation 22 reflects the game data in the live contents produced in advance and thereby generates a live screen. For example, the video system workstation 22 displays the game data at predetermined locations in the various display contents, displays images and videos by associating display contents with image files and video files based on file path information in the game data, and synchronously displays the positions of the various display contents based on position coordinates.

The video system workstation 22 combines a game video continuously input from the game machine 10 with the generated live screen and outputs the live screen combined with the game video to the large monitor 25. The large monitor 25 displays a screen obtained by combining the game video and the live screen including the live contents.

### «PROCESSES AFTER GAME»

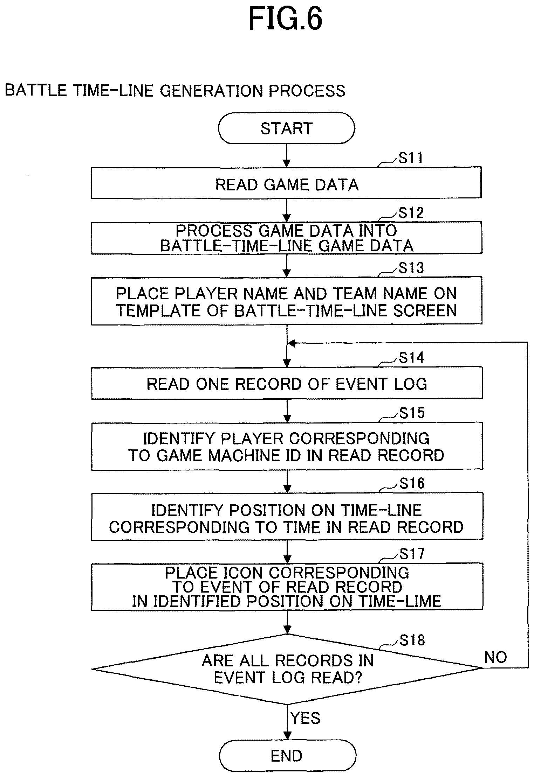

FIG. 6 is a flowchart illustrating an example of a battle time-line screen generation process. The battle time-line screen generation process illustrated in FIG. 6 is started in response to an instruction from the operator or the commentator. The instruction from the operator or the commentator may be received from the live controller 21, the video system workstation 22, or the mobile terminal 20.

At step S11, the battle-time-line game data processor 66 of the live controller 21 reads game data from the game data storage 65. The battle-time-line game data processor 66 processes the read game data for the battle time-line screen. The game data transmitter 64 transmits the game data processed by the battle-time-line game data processor 66 to the video system workstation 22.

At step S13, the game data acquirer 73 of the video system workstation 22 obtains the game data processed for the battle time-line screen. The screen generator 74 reads the player information illustrated in FIG. 5 from the obtained game data. The player information illustrated in FIG. 5 is an example of player information of players who participated in the game for which the battle time-line screen is being generated. If the player information includes player information of players participated in different games, the player information may include a field containing identification information for uniquely identifying the games to enable selection of player information of players participated in the game for which the battle time-line screen is being generated. The screen generator 74 arranges the player names and the team names of players whose player information has been read on a template of the battle time-line screen.

At step S14, the screen generator 74 reads one record from the event log illustrated in FIG. 4 included in the game data obtained at step S13. At step S15, the screen generator 74 identifies a player corresponding to the game machine ID in the record read at step S14. Next, at step S16, the screen generator 74 identifies a position on a time-line (the time axis from the start of the game to the end of the game) corresponding to the time in the record read at step S14.

At step S17, the screen generator 74 places an icon corresponding to the event of the record read at step S14 in the position identified at step S16 on the time-line of the player identified at step S15. For example, when the first record of the event log illustrated in FIG. 4 is read, the screen generator 74 places an icon indicating an event "death" in a position corresponding to time "1:00" on the time line of the player corresponding to the game machine ID "M03".

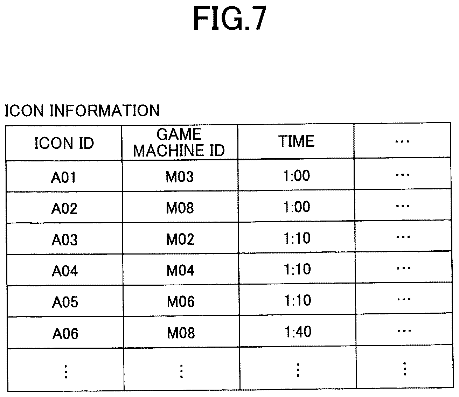

When the third record is read, the screen generator 74 places an icon indicating an event "kill" in a position corresponding to time "1:10" on the time-line of the player corresponding to the game machine ID "M02". In the event log illustrated in FIG. 4, it is assumed that a character image in the player information corresponding to a player whose player character has been killed is displayed as an icon indicating an event "kill". Therefore, the type field of the third record includes a game machine ID "M06". The screen generator 74 may be configured to generate and store icon information of icons placed on the battle time-line screen at step S17 as illustrated in FIG. 7.

FIG. 7 is a table illustrating an example of icon information. The icon information illustrated in FIG. 7 includes fields such as an icon ID, a game machine ID, and a time. The icon ID is an example of identification information that uniquely identifies an icon placed on the battle time-line. The game machine ID is an example of identification information that uniquely identifies a game machine 10. The time indicates a time at which an event corresponding to the icon occurred.

One icon is placed on the battle time-line screen by performing steps S14 through S17 once. Steps S14 through S17 are repeated until all records are read from the event log of the game for which the battle time-line screen is being generated.

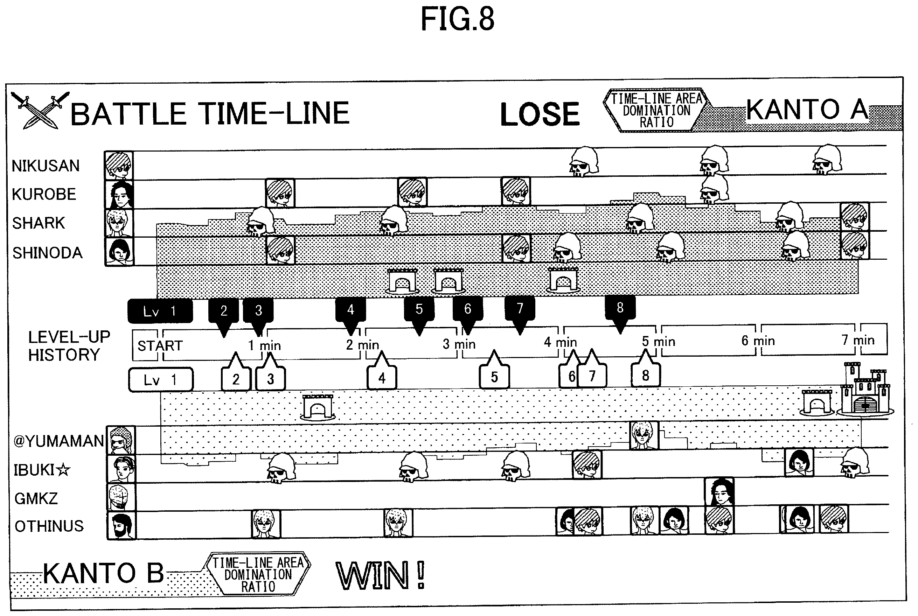

With the battle time-line screen generation process of FIG. 6, the screen generator 74 can generate, for example, a battle time-line screen as illustrated in FIG. 8. FIG. 8 is a drawing illustrating an example of a battle time-line screen. In the exemplary battle time-line screen of FIG. 8, the time-line (the time axis from the start of the game to the end of the game) extends in the lateral direction.

The exemplary battle time-line screen of FIG. 8 displays a four-person team competition and shows the results of a game performed between four players belonging to a team "Kanto A" on the upper side and four players belonging to a team "Kanto B" on the lower side. The icons arranged on the battle time-line screen of FIG. 8 can be selected by the operator or the commentator. For example, the battle time-line screen of FIG. 8 indicates that the event "death" occurred three times for the player character of a player "Nikusan" in the second half of the game. The battle time-line screen may also display information such as an area domination ratio that helps the viewer to understand which team is dominant.

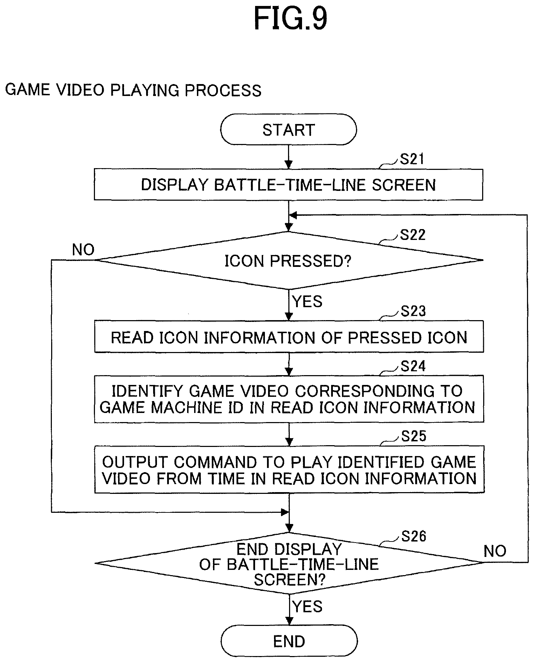

FIG. 9 is a flowchart illustrating an example of a game video playing process. At step S21, the video output unit 76 of the video system workstation 22 displays a battle time-line screen on which the operator or the commentator can select an icon.

At step S22, the operation information reporter 79 of the video system workstation 22 determines whether an operation of selecting (or pressing) an icon displayed on the battle time-line screen has been received.

When an operation of selecting an icon displayed on the battle time-line screen has been received, the operation information reporter 79 proceeds to step S23 and reads icon information of the selected icon illustrated in FIG. 7. At step S24, the operation information reporter 79 reports, to the replay data controller 67 of the live controller 21, information on the operation performed by the operator or the commentator to select the icon on the battle time-line screen based on the icon information read at step S23.

The replay data controller 67 identifies a game video corresponding to a game machine ID and a replay start point (time) based on the information on the operation performed by the operator or the commentator to select the icon on the battle time-line screen. At step S25, the replay data controller 67 transmits, to the video recorder 14, a command to play the identified game video from the replay start point (time). The video recorder 14 starts a replay based on the command received from the replay data controller 67 of the live controller 21. Here, instead of using the exact time in the "time" field of the icon information as the replay start point (time), the replay start point may be set at a time that is, for example, several seconds before the time in the "time" field of the icon information.

At step S26, the operation information reporter 79 determines whether an operation to end the display of the battle time-line screen has been received. If the operation to end the display of the battle time-line screen has not been received, the operation information reporter 79 returns to step S22. If the operation to end the display of the battle time-line screen has been received, the operation information reporter 79 terminates the process of FIG. 9. If the operation of selecting an icon displayed on the battle time-line screen has not been received at step S22, the operation information reporter 79 proceeds to step S26.

With the game video playing process of FIG. 9, it is possible to start a replay of a game video from the time when an event occurred by selecting an icon on the battle time-line screen and indicating the type of the event and the time at which the event occurred. Accordingly, in a running commentary using a recorded game video, the above process makes it possible to start a replay of the game video by selecting a desired event from multiple events occurred during a game, and thereby makes it possible to improve the quality of the running commentary.

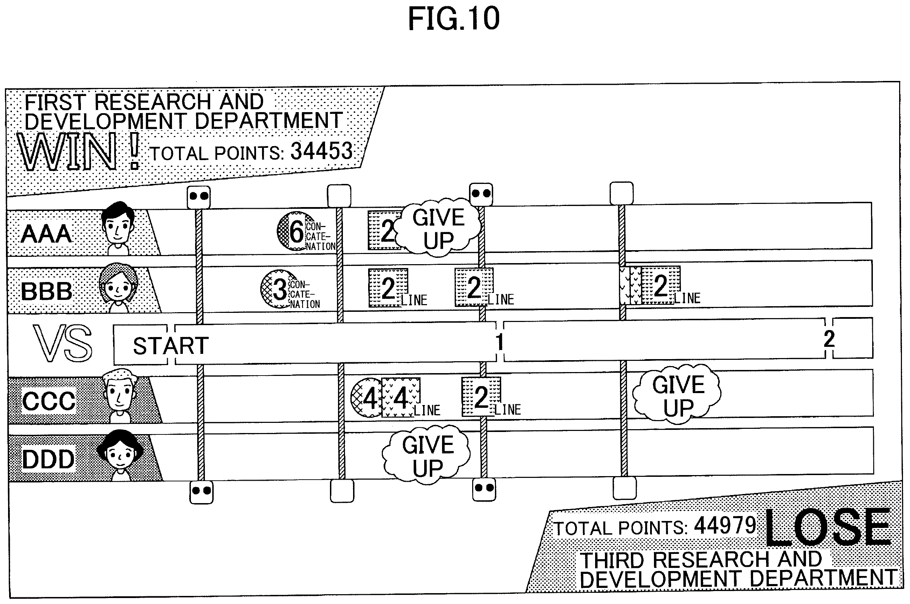

The battle time-line screen is not limited to the image illustrated in FIG. 8. For example, the battle time-line screen may be implemented as illustrated in FIG. 10. FIG. 10 is a drawing illustrating another example of a battle time-line screen. The battle time-line screen can be easily changed by changing the template of the battle time-line screen and icon images.

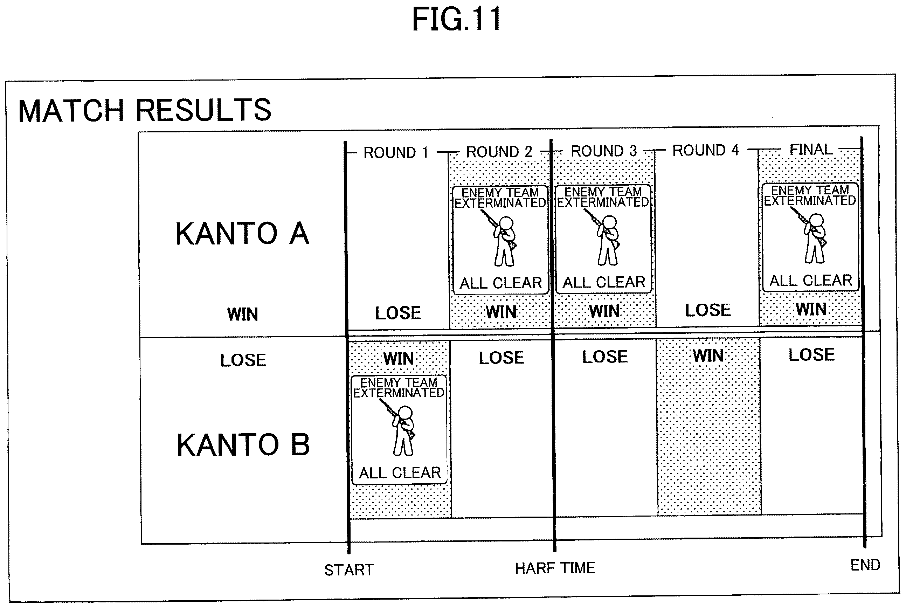

Also, in a case where a match result is determined based on multiple game results (round results), for example, a round result for which a battle time-line screen is displayed may be selected from a screen as illustrated in FIG. 11. FIG. 11 is a drawing illustrating an example of a screen for selecting a game result for which a battle time-line screen is displayed.

### [SECOND EMBODIMENT]

In the first embodiment, a battle time-line on which icons representing events occurred during a game are arranged is generated using game data output from the game machines 10 so that an event to be replayed can be easily selected.

In a second embodiment, a voting time-line, on which selectable results of votes casted during a presentation (such as the number of votes favorably-evaluating the presentation) are arranged, is generated using vote data of users who are the audience of the presentation so that a favorably-evaluated scene or a unfavorably-evaluated scene can be easily replayed. In the second embodiment, descriptions of configurations and methods that are substantially the same as those of the first embodiment may be omitted.

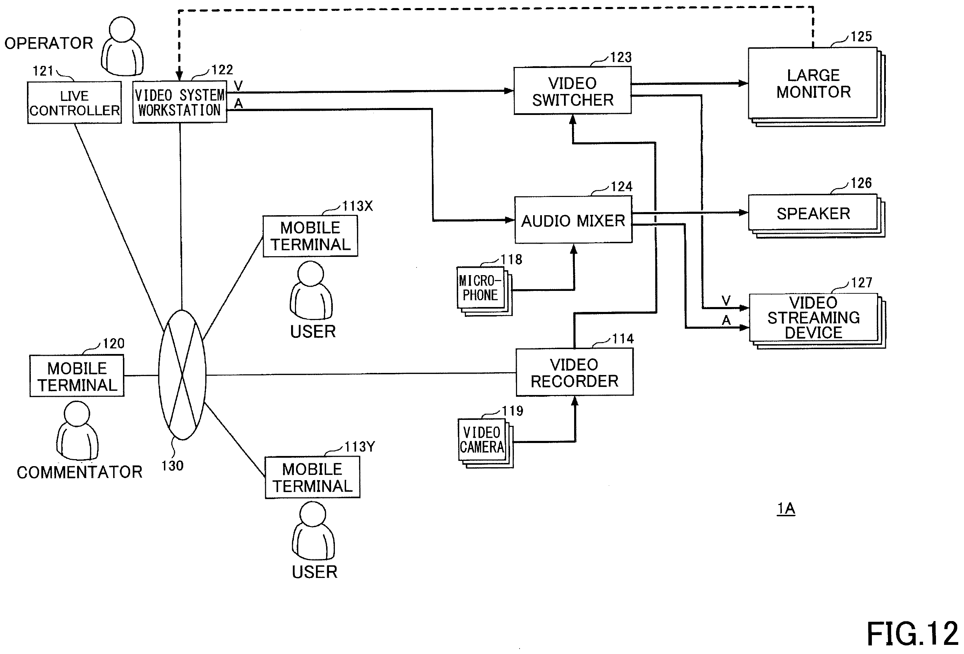

FIG. 12 is a drawing illustrating another example of a configuration of an information processing system according to the embodiment. An information processing system 1A illustrated in FIG. 12 is constructed, for example, in a facility where a presentation is made. The information processing system 1A of FIG. 12 includes mobile terminals 113, a video recorder 114, microphones 118, video cameras 119, a mobile terminal 120, a live controller 121, a video system workstation 122, a video switcher 123, an audio mixer 124, large monitors 125, speakers 126, video streaming devices 127, and a network 130.

One or more mobile terminals 113 (113X, 113Y, ...) are used during a presentation by users or audience to vote to indicate whether a content of the presentation is favorable or not. Each of the mobile terminals 113 is, for example, a tablet, a smartphone, a PC, or a digitizer pad that transmits a vote of the user to the network 130.

One or more video cameras 119 capture videos of, for example, a facility where a presentation is made. An output port of each video camera 119 is connected to a video-audio input port of the video recorder 114. The video recorder 114 records (or registers) a video audio signal from the video camera 119 and outputs the video audio signal from a video-audio output port. The video-audio output port of the video recorder 114 is connected to an input port of the video switcher 123.

Also, a data communication port of the mobile terminal 113 and a data communication port of the video recorder 114 are connected to the network 130 such as a LAN or the Internet. The data communication ports may be connected either by wire or wirelessly to the network 130.

The live controller 121 and the video system workstation 122 are computers operated by an operator (a commentator may also use these computers). Data communication ports of the live controller 121 and the video system workstation 122 are connected to the network 130. The video system workstation 122 includes a production monitor used for content production work and an on-air monitor used to monitor a video that is finally output from the video system workstation 22. A data communication port of the mobile terminal 120 operated by the commentator is connected to the network 130. One or more microphones 118 pick up, for example, the voice of the commentator.

A video output port of the video system workstation 122 and an output port of the video recorder 114 are connected to input ports of the video switcher 123. The video switcher 123 includes a function to output a video signal selected from video signals input to the multiple input ports and also includes a function to combine videos.

Input ports of the audio mixer 124 are connected to an audio output port of the video system workstation 122 and output ports of the microphones 118. The audio mixer 124 mixes audio signals input to the multiple input ports. One or more large monitors 125 receive video signals from output ports of the video switcher 123. Each of the large monitors 125 is implemented by, for example, a large liquid crystal panel or a projector.

One or more speakers 126 receive audio signals from output ports of the audio mixer 124. Each video streaming device 127 performs video streaming. The video streaming device 127 receives video signals and audio signals as sources from output ports of the video switcher 123 and the audio mixer 124. The video switcher 123 and the audio mixer 124 may be placed in such positions that the operator can directly operate these devices or may be configured such that the operator can remotely operate these devices.

The information processing system 1A includes a storage for storing votes of users output from the mobile terminals 113 to the network 130 as vote data. The storage for storing the vote data may be provided in the live controller 121 or the video system workstation 122. Alternatively, a separate device for storing the vote data may be provided.

Also, the information processing system 1A includes a function to generate a voting time-line screen described later by using the vote data stored in the storage. The function for generating the voting time-line screen may be provided in the live controller 121 or the video system workstation 122. Alternatively, a separate device for generating the voting time-line screen may be provided. In the present embodiment, as an example, the live controller 121 stores vote data, and the video system workstation 122 generates a voting time-line screen using the vote data. However, the present invention is not limited to this example. Needless to say, the configuration of the information processing system 1A illustrated in FIG. 12 is just an example and may be changed according to its application or purpose.

### <PROCESS>

Below, an exemplary process according to the present embodiment is described. In the process, a voting time-line screen is generated and displayed after a presentation, and the operator or the commentator selects a vote count of "Like!!" displayed on the voting time-line screen to start a replay from a scene corresponding to the vote count. On the voting time-line screen, icons representing vote counts of votes casted during the presentation are arranged in chronological order. The operator or the commentator can select an icon representing a vote count from the voting time-line screen and thereby start a replay such that a scene corresponding to the vote count is displayed.

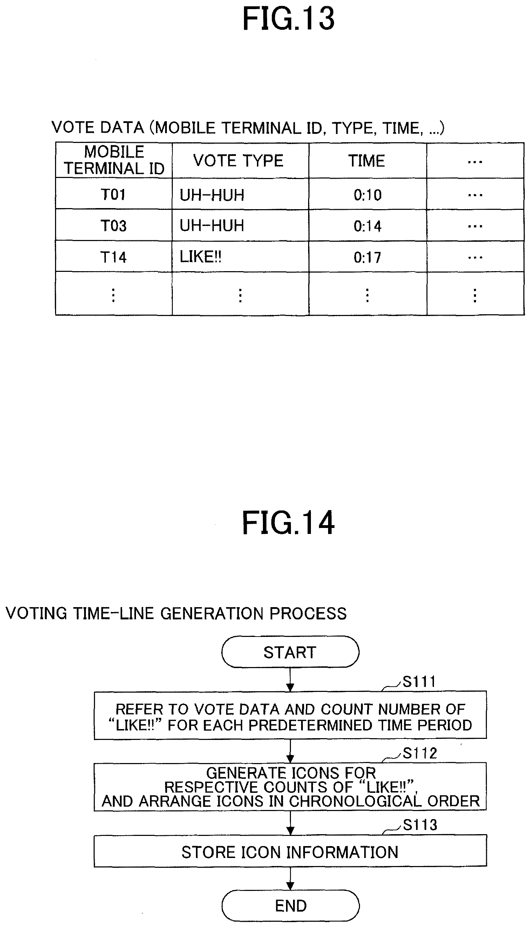

FIG. 13 is a table illustrating an example of vote data. The vote data illustrated in FIG. 13 includes fields such as a mobile terminal ID, a vote type, and a time. The mobile terminal ID is an example of identification information that uniquely identifies the mobile terminal 113 and may be represented by, for example, a machine number, a machine name, or a network address. The vote type indicates the type of a vote casted by a user. Examples of vote types include "Like!!" indicating favorable evaluation of the presentation and "Uh-huh" indicating unfavorable evaluation of the presentation. The time indicates a time at which a vote is casted. For example, when vote data is transmitted from the mobile terminal 113, the live controller 121 obtains the vote data and stores the vote data as illustrated in FIG. 13.

FIG. 14 is a flowchart illustrating an example of a voting time-line screen generation process. The voting time-line screen generation process is started in response to an instruction from the operator or the commentator. At step S111, the live controller 121 reads the vote data from the storage. The live controller 121 counts the number of votes indicating "Like!!" in the read vote data for each predetermined time period and transmits the counts to the video system workstation 22.

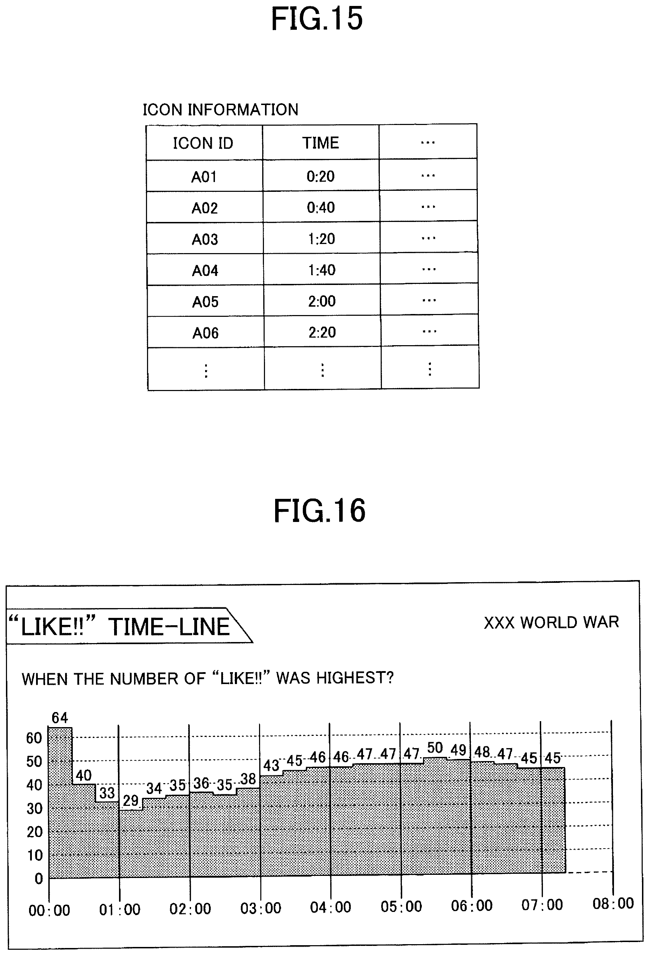

At step S112, the video system workstation 22 generates icons representing the respective counts of "Like!!" received from the live controller 121 and arranges the icons on a template of the voting time-line screen. The video system workstation 22 may be configured to generate and store icon information of the icons arranged on the voting time-line screen at step S112 as exemplified by FIG. 15.

FIG. 15 is a table illustrating another example of icon information. The icon information illustrated in FIG. 15 includes fields such as an icon ID and a time. The icon ID is an example of identification information that uniquely identifies an icon placed on the voting time-line. The time indicates a time at which the number of votes indicating "Like!!" reached the count corresponding to the icon.

With the voting time-line screen generation process of FIG. 14, the video system workstation 22 can generate, for example, a voting time-line screen as illustrated in FIG. 16. FIG. 16 is a drawing illustrating an example of a voting time-line screen. In the exemplary voting time-line screen of FIG. 16, the time-line (the time axis from the start of a presentation to the end of the presentation) extends in the lateral direction.

In the voting time-line screen of FIG. 16, the number of "Like!!" casted by users or audience and indicating favorable evaluation of the presentation is displayed at 20-second intervals along the time axis. In the voting time-line screen of FIG. 16, the number of "Like!!" is represented by, for example, an icon that is selectable by the operator or the commentator.

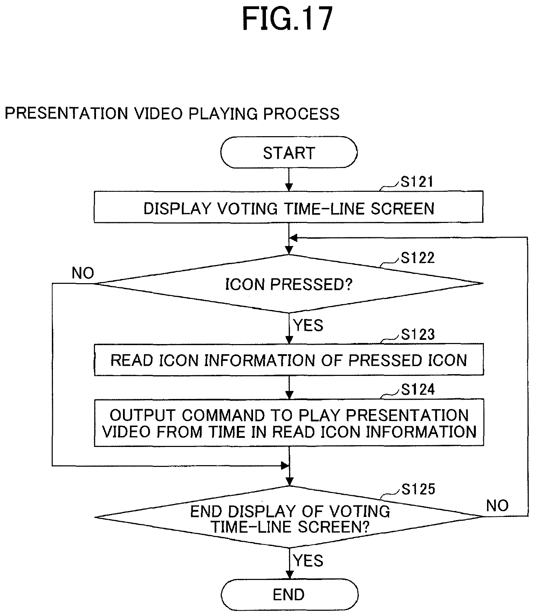

FIG. 17 is a flowchart illustrating an example of a presentation video playing process. At step S121, the video output unit 76 of the video system workstation 22 displays a voting time-line screen on which the operator or the commentator can select an icon.

At step S122, the operation information reporter 79 of the video system workstation 22 determines whether an operation of selecting (or pressing) an icon displayed on the voting time-line screen has been received.

When an operation of selecting an icon displayed on the voting time-line screen has been received, the operation information reporter 79 proceeds to step S123 and reads icon information of the selected icon illustrated in FIG. 15. At step S124, the operation information reporter 79 reports, to the replay data controller 67 of the live controller 21, information on the operation performed by the operator or the commentator to select the icon on the voting time-line screen based on the icon information read at step S123.

The replay data controller 67 identifies a replay start point (time) based on the information on the operation performed by the operator or the commentator to select the icon on the voting time-line screen. The replay data controller 67 transmits, to the video recorder 14, a command to play a presentation video from the identified replay start point (time). The video recorder 14 starts a replay based on the command received from the replay data controller 67 of the live controller 21. Here, instead of using the exact time in the "time" field of the icon information as the replay start point (time), the replay start point may be set at a time that is, for example, several seconds before the time in the "time" field of the icon information.

At step S125, the operation information reporter 79 determines whether an operation to end the display of the voting time-line screen has been received. If the operation to end the display of the voting time-line screen has not been received, the operation information reporter 79 returns to step S122. If the operation to end the display of the voting time-line screen has been received, the operation information reporter 79 terminates the process of FIG. 17. If the operation of selecting an icon displayed on the voting time-line screen has not been received at step S122, the operation information reporter 79 proceeds to step S125.

With the presentation video playing process of FIG. 17, it is possible to select an icon that is disposed on the voting time-line screen and indicates the number of "Like!!" and a time, and thereby start a replay of a presentation video from that time. Accordingly, in a running commentary using a recorded presentation video, the above process makes it possible to start a replay of the presentation video by selecting a scene favored by many people based on the number of "Like!!" casted by the audience, and thereby makes it possible to improve the quality of the running commentary.

### <SUMMARY>

The present embodiment makes it possible to display a time-line screen including icons representing randomly-playable scenes of a recorded (or registered) video based on log data corresponding to the video, and makes it possible to easily receive a selection of a scene to be randomly played using the time-line screen. That is, according to the present embodiment, scenes, which are included in a recorded video and likely to be replayed, are displayed as icons on a time-line screen. This configuration makes it possible to easily perform replay operations and improve the quality of a running commentary.

### EXPLANATION OF REFERENCE NUMERALS

- 1, 1A: Information processing system
- 10: Game machine
- 11, 19, 119: Video camera
- 12: Vital data measurement device
- 20, 113, 120: Mobile terminal
- 14, 114: Video recorder
- 15, 23, 123: Video switcher
- 16: Video splitter and joiner
- 17: Audio switcher
- 18, 118: Microphone
- 21, 121: Live controller
- 22, 122: Video system workstation
- 24, 124: Audio mixer
- 25, 125: Large monitor
- 26, 126: Speaker
- 27, 127: Video streaming device
- 30, 130: Network
- 51: Game processor
- 52: Game video-audio output unit
- 53: Game audio output unit
- 54: Game data output unit
- 61: Synchronized game machine selector
- 62: Game data synchronizer
- 63: Game data processor
- 64: Game data transmitter
- 65: Game data storage
- 66: Battle-time-line game data processor
- 67: Replay data controller
- 71: Content producer
- 72: Game video synchronizer
- 73: Game data acquirer
- 74: Screen generator
- 75: Screen combiner
- 76: Video output unit
- 77: Audio output unit
- 78, 81: Operations unit
- 79: Operation information reporter

## Claims

1. An information processing system, comprising:
at least one game machine that outputs a game video and game data indicating types of events occurred in a game and time points at which the events occurred;
a game video storage device that stores the game video;
a game data storage device that stores the game data;
a content selection receiving device that displays, based on the game data, contents representing types of one or more events occurred in the game and time points at which the one or more events occurred and receives, from a user, an operation to select a content from the contents;
a controller that controls a playback device, based on the selected content, to start playing the game video from a time point at which an event represented by the selected content occurred; and
the playback device that plays the game video stored in the game video storage device under control of the controller.

2. The information processing system as claimed in claim 1, wherein the content selection receiving device obtains image data of the contents associated with the types of the one or more events occurred in the game from a content data storage device that stores the types of the events in association with the image data of the contents, and displays the obtained image data of the contents in chronological order based on the time points at which the events occurred.

3. The information processing system as claimed in claim 2, wherein the content data storage device stores the image data of the contents to be displayed by the content selection receiving device in association with the types of the events based on the game data output by the game machine.

4. An information processing system, comprising:
a counting result data storage device that counts information collected from one or more user terminals while video data is being displayed and stores counting result data including counting results and time points that are associated with each other;
a video data storage device that stores the video data;
a content selection receiving device that displays, based on the counting result data, contents representing the counting results and the time points at which the counting results are obtained and receives, from a user, an operation to select a content from the contents;
a controller that controls a playback device, based on the selected content, to start playing the video data from a time point at which a counting result represented by the selected content was obtained; and
the playback device that plays the video data stored in the video data storage device under control of the controller.

5. A video playing method performed by an information processing system including at least one game machine that outputs a game video and game data indicating types of events occurred in a game and time points at which the events occurred and at least one information processing apparatus, the video playing method comprising:
a storing step of storing the game video and the game data;
a content selection receiving step of displaying, based on the game data, contents that represent types of one or more events occurred in the game and time points at which the one or more events occurred and receiving, from a user, an operation to select a content from the contents;
a control step of controlling a playback device, based on the selected content, to start playing the game video from a time point at which an event represented by the selected content occurred; and
a playback step of playing the game video under control of the control step.

6. A video playing method performed by an information processing system including one or more user terminals and one or more information processing apparatuses, the video playing method comprising:
a counting result storing step of counting information collected from the one or more user terminals while video data is being displayed and storing counting result data including counting results and time points that are associated with each other;
a video data storing step of storing the video data;
a content selection receiving step of displaying, based on the counting result data, contents that represent the counting results and the time points at which the counting results are obtained and receiving, from a user, an operation to select a content from the contents;
a control step of controlling a playback device, based on the selected content, to start playing the video data from a time point at which a counting result represented by the selected content was obtained; and
a playback step of playing the video data under control of the control step.
